# EUROPEAN PATENT APPLICATION

(11) **EP 1 643 745 A1**
(43) Date of publication of application: **05.04.2006**
(21) Application number: 04292351.6
(22) Date of filing: 04.10.2004
(51) Int. Cl.: H04M 3/533

(54) **Method and system for accessing two different voice mailboxes**

(71) Applicant: ALCATEL, 75008 Paris (FR)
(72) Inventor: Leroy, Jean Francois, 29850 Gouesnou (FR)
(74) Representative: Rausch, Gabriele

(57) **Abstract**

The present invention concerns a method for accessing a specific or second voice mail of a user of a telecommunication terminal, characterised in that it mainly consists in initialising a telecommunication and accessing, through a public communication network (2), a first voice mail system (3) managed by a first provider and having a messaging box assigned to the concerned user, selecting and activating a specific re-routing command (4), and re-routing said initialised telecommunication towards said specific or second voice mail system (5) managed by a second provider and accessing the messaging box assigned to said user in said latter voice mail system (5).

## Description

The present invention is related to the field of messaging systems and functions, and concerns a method for accessing a second voice mail after having accessed a first voice mail, i. e. a method for accessing two different voice mails in two different voice mail systems.

Various voice mail systems are known, as well as various ways to access and use such systems and the associated messaging boxes, especially when accessing them with a mobile or wireless telecommunication terminal, such as a cellular phone for example.

Nowadays more and more users have more than one messaging box, in particular simultaneously a public one and a private or business one.

When said messaging boxes are located in two different and separate voice mail systems, the user will have to initialise two telecommunications to access the two of them, as the two voice mail systems have no interworking capacity.

Therefore the main problem addressed by the present invention is to propose a solution able to provide a single access for two different messaging boxes within two different voice mail systems.

US 2003/01 58 739 discloses a speech navigation method and system for a voice mail system, but does not address the aforementioned problem.

The present invention provides a method for accessing a specific or second voice mail of a user of a telecommunication terminal, characterised in that it mainly consists in initialising a telecommunication and accessing, through a public communication network, a first voice mail system managed by a first provider and having a messaging box assigned to the concerned user, selecting and activating a specific re-routing command, and re-routing said initialised telecommunication towards said specific or second voice mail system managed by a second provider and accessing the messaging box assigned to said user in said latter voice mail system.

Also provided is a voice mail system able to perform the aforementioned method.

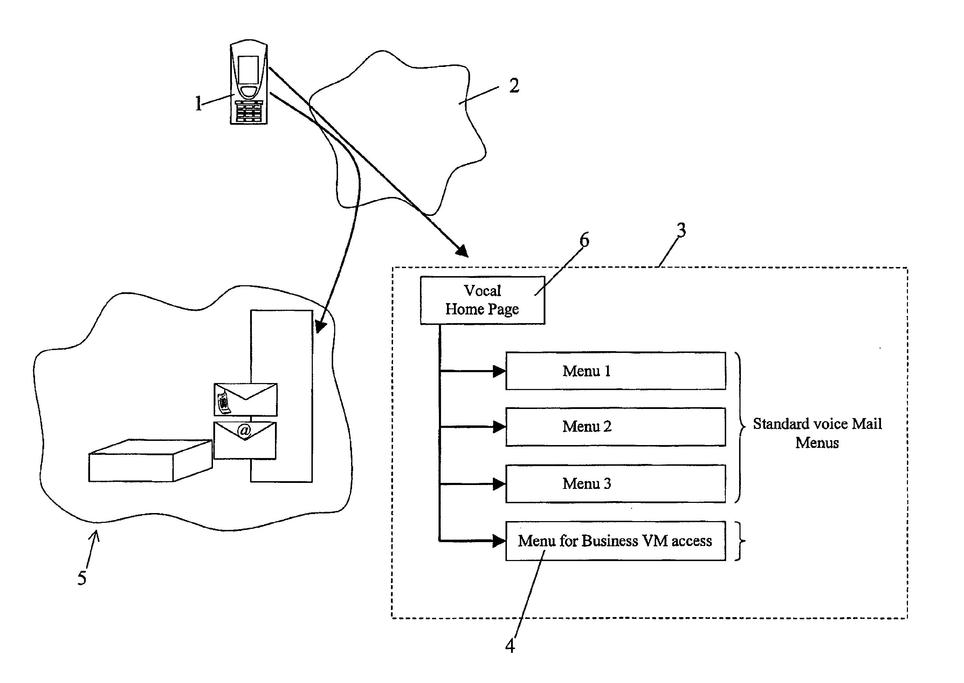

The present invention will be better understood thanks to the following description of additional features and advantages, and will now be described in more details, by way of example, in relation to a non limitative embodiment shown on the enclosed drawing, wherein:
the single figure is a schematic drawing showing the working of the method and of the system according to the invention.

The inventive method mainly consists in initialising a telecommunication and accessing, through a public communication network 2, a first voice mail system 3 managed by a first provider and having a messaging box assigned to the concerned user, selecting and activating a specific re-routing command 4, and re-routing said initialised telecommunication towards said specific or second voice mail system 5 managed by a second provider and accessing the messaging box assigned to said user in said latter voice mail system 5.

According to an advantageous embodiment of the invention, the step of selecting the specific re-routing command 4 consists in navigating through the menus available at the vocal home page 6 of the first voice mail system 3 using Dual-Tone Multi-Frequency (DTMF) based interaction and the step of activating the specific re-routing command 4 consists in composing the DTMF tone associated to a specific voice mail system access routine.

Of course an other known voice navigation mechanism can also be used as an alternative.

In connection with a practical implementation of the invention, the first voice mail system 3 is a public voice mail system and the specific voice mail system 5 is a private or business voice mail, both voice mail systems 3 and 5 being accessible by the user and comprising a messaging box assigned to the latter.

Thus, the invention proposes, for a given user, the integration of a new option, in the form of a menu for example, in the vocal home page of a public voice mail system 3 managed by a first operator, in order to provide a direct access to the private messaging box of said user in the private or business voice mail system 5, managed by a second operator.

Various DTMF navigation mechanisms as well as various communication re-routing mechanisms are commonly known to the skilled person and do not need further description.

Before allowing access to the second or specific (private or business) voice mail, the concerned system may initiate an authentication procedure (possibly a new authentication procedure after a first one performed to control access to the public voice mail), in order to check identity and access authorisation of the concerned user.

The present invention also encompasses a particular voice mail system 3 managed by a first provider and accessible by a user of a telecommunication terminal 1 through a public communication network 2, said user having a messaging box assigned in said first voice mail system 3 and a second messaging box assigned in a second voice mail system 5 managed by a second provider and also accessible by said user by means of his terminal 1 through said public communication network 2. Said first voice mail system 3 comprises a specific re-routing means 4 allowing a re-routing of a telecommunication established with said first voice mail system 3 towards said second voice mail system 5, by selecting and activating a corresponding specific command.

Preferably, the first voice mail system 3 provides different menus available at a vocal home page 6, among which a particular menu 4 for re-routing the telecommunication and accessing the user's second messaging box within the second voice mail system 5, said particular menu being selectable by navigating through the menus using DTMF based interaction and activated by composing the corresponding DTMF tone.

The first, for example public, voice mail system 3 will of course be adapted and incorporate all the means necessary to enable the user to carry out the method described herein before.

The present invention is, of course, not limited to the preferred embodiment described and represented herein, changes can be made or equivalents used without departing from the scope of the invention.

## Claims

1. Method for accessing a specific or second voice mail of a user of a telecommunication terminal, **characterised in that** it mainly consists in initialising a telecommunication and accessing, through a public communication network (2), a first voice mail system (3) managed by a first provider and having a messaging box assigned to the concerned user, selecting and activating a specific re-routing command (4), and re-routing said initialised telecommunication towards said specific or second voice mail system (5) managed by a second provider and accessing the messaging box assigned to said user in said latter voice mail system (5).

2. Method according to claim 1, **characterised in that** the step of selecting the specific re-routing command (4) consists in navigating through the menus available at the vocal home page (6) of the first voice mail system (3) using Dual-Tone Multi-Frequency (DTMF) based interaction.

3. Method according to anyone of claim 1 or 2, **characterised in that** the step of activating the specific re-routing command (4) consists in composing the DTMF tone associated to a specific voice mail system access routine.

4. Method according to anyone of claims 1 to 3, **characterised in that** the first voice mail system (3) is a public voice mail system and the specific voice mail system (5) is a private or business voice mail, both voice mail systems (3 and 5) being accessible by the user and comprising a messaging box assigned to the latter.

5. Voice mail system managed by a first provider and accessible by a user of a telecommunication terminal through a public communication network, said user having a messaging box assigned in said first voice mail system and a second messaging box assigned in a second voice mail system managed by a second provider and also accessible by said user by means of his terminal through said public communication network, **characterised in that** said first voice mail system (3) comprises a specific re-routing means (4) allowing a re-routing of a telecommunication established with said first voice mail system (3) towards said second voice mail system (5), by selecting and activating a corresponding specific command.

6. Voice mail system according to claim 5, **characterised in that** the first voice mail system (3) provides different menus available at a vocal home page (6), among which a particular menu (4) for re-routing the telecommunication and accessing the user's second messaging box within the second voice mail system (5), said particular menu being selectable by navigating through the menus using DTMF based interaction and activated by composing the corresponding DTMF tone.
